# EUROPÄISCHE PATENTSCHRIFT

(11) **EP 3 899 440 B1**
(45) Veröffentlichungstag und Bekanntmachung des Hinweises auf die Patenterteilung: **20.09.2023**
(21) Anmeldenummer: 19808757.9
(22) Anmeldetag: 21.11.2019
(51) Int. Cl.: G01P 5/08, G01F 1/58

(54) **MAGNETISCH-INDUKTIVE DURCHFLUSSMESSSONDE UND MESSSTELLE**
MAGNETIC INDUCTIVE FLOW SENSOR AND MEASUREMENT POINT
DÉBITMÈTRE À INDUCTION MAGNÉTIQUE ET POINT DE MESURE

(30) Priorität: 19.12.2018 DE 102018132885
(43) Veröffentlichungstag der Anmeldung: 27.10.2021
(73) Patentinhaber: Endress + Hauser Flowtec AG, 4153 Reinach (CH)
(72) Erfinder: RUFER, Heinz, 4143 Dornach (CH); VOIGT, Frank, 79576 Weil am Rhein (DE); ZIEGLER, Steffen, 79650 Schopfheim (DE)
(74) Vertreter: Penner, Paul
(86) Internationale Anmeldenummer: PCT/EP2019/082013
(87) Internationale Veröffentlichungsnummer: WO 2020/126274

(56) Entgegenhaltungen:
- EP-A1- 0 892 251
- DE-A1-102007 004 826
- US-A- 3 592 187
- US-A- 5 670 724

## Beschreibung

Magnetisch-induktive Durchflussmessgeräte werden zur Bestimmung der Durchflussgeschwindigkeit und/oder des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass eine Symmetrieachse der Magnetfeldlinien im Wesentlichen senkrecht zur Querachse verlaufen. Ein an die Mantelfläche des Messrohres angebrachtes Messelektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messspannung laut Faraday'schem Induktionsgesetz von der Geschwindigkeit des fließenden Mediums abhängt, kann aus der Messspannung die Durchflussgeschwindigkeit und, mit Hinzunahme eines bekannten Rohrquerschnitts, der Volumendurchfluss des Mediums ermittelt werden.

Im Gegensatz zu magnetisch-induktiven Durchflussmessgeräten, bei denen eine Spulenanordnung zur Erzeugung eines ein Messrohr durchdringenden Magnetfelds auf der Mantelflache des Messrohrs fixiert ist und mindestens zwei Messelektroden in der Innenwandung angeordnet sind, werden magnetisch-induktive Durchflussmesssonden mit ihrem üblicherweise kreiszylindrischen Gehäuse in eine seitliche Öffnung des Messrohrs eingesteckt und fluiddicht fixiert. Die erwähnte Spulenanordnung auf der Mantelflache des Messrohrs entfällt, da das Magnetfeld lediglich im Bereich des in das Medium ragenden Frontendes der Durchflussmesssonde existiert bzw. von einem deren Spulenanordnung durchfliessenden Strom in diesem Bereich erzeugt wird. Die Durchflussmesssonde umfasst üblicherweise zwei stiftförmig ausgebildete Messelektroden. Es sind aus der EP0534003A1 aber auch Durchflussmesssonden mit einer im Zentrum des Frontendes angeordneten, stiftförmigen Messelektrode und einer die stiftförmige Messelektrode umschließende Ringelektrode bekannt.

Die EP0892251A1 offenbart eine magnetisch-induktive Durchflussmesssonde, deren in das Medium ragende Frontende die Form einer Kugelkalotte annimmt und in der eine erste und zweite galvanische Elektrode auf einem der Meridiane der Kugelkalotte symmetrisch zu einem Scheitelpunkt des Meridians angeordnet sind. Die Durchflussmesssonde ist praktisch senkrecht zu einer Längsachse der Rohrleitung einzutauchen und durch Drehung so auszurichten, dass eine die zwei Elektroden verbindende Gerade senkrecht zur Strömungsrichtung verläuft.

Aus der DE102012109308A1 ist ein Füllstandsüberwachungssystem mit einer Elektrode zur Überwachung des Füllstandes eines fließenden Mediums in einem Rohr bekannt, die einen integrierten Temperatursensor aufweist, so dass neben dem Durchflussvolumen, der Durchflussgeschwindigkeit und dem Füllstand zusätzlich die Temperatur des Mediums überwacht werden kann.

Aus der EP0770855A1 ist bereits ein magnetisch-induktives Durchflussmessgerät bekannt, das neben den Messelektroden zur Ermittlung einer Durchflussgeschwindigkeit zwei Druckmesswandler aufweist, die in der Wandung des Messrohres entlang einer Mantellinie angeordnet sind.

Die US5670724 lehrt ein Durchflussmessgerät mit einem Messelektrodenpaar und einem unmittelbar zwischen den beiden Messelektroden angeordneten Druckmesswandler.

Diesen Ausgestaltungen nachteilig ist aber, dass für die Installation des Druckmesswandlers und/oder des Temperatursensors in die Messstelle eine zusätzliche Öffnung in das Messrohr eingearbeitet werden muss. Jede Öffnung ist jedoch eine potentielle Leckagestelle und sollte somit möglichst vermieden werden.

Der Erfindung liegt die Aufgabe zugrunde eine magnetisch-induktive Durchflussmesssonde bereitzustellen, die dazu eingerichtet ist neben dem Durchflussvolumen und/oder der Durchflussgeschwindigkeit einen weiteren Prozessparameter des Mediums zu bestimmen.

Die Aufgabe wird gelöst durch die Durchflussmesssonde nach Anspruch 1 und die Messstelle nach Anspruch 8.

Die erfindungsgemäße magnetisch-induktive Durchflussmesssonde zur Ermittlung des Durchflussvolumens und/oder der Durchflussgeschwindigkeit eines flüssigen Mediums in einem Messrohr umfasst ein Gehäuse, ein im Gehäuse endseitig angeordnetes Frontteil mit einem Frontende, wobei das Frontende mit dem Medium beaufschlagbar ist, mindestens zwei einen galvanischen Kontakt mit dem Medium bildende Messelektroden, wobei das Frontteil mindestens eine erste und eine zweite Öffnungen für die Messelektroden aufweist, und eine im Gehäuse angeordnete magnetfelderzeugende Vorrichtung zur Erzeugung eines durch das Frontende hindurchreichenden Magnetfeldes, und ist dadurch gekennzeichnet, dass mindestens ein Sensor zur Ermittlung eines Prozessparameters des Mediums in dem Gehäuse angeordnet ist, wobei der Sensor einen Druckmesswandler umfasst, welcher mit dem auf das Frontende wirkenden Druck beaufschlagbar ist, wobei das Frontteil mindestens eine Öffnung aufweist der als Wirkdruckkanal ausgebildet ist.

Es ist besonders vorteilhaft, wenn mindestens ein Sensor im Gehäuse der magnetisch-induktiven Durchflussmesssonde eingebaut ist. Dafür ist die magnetfelderzeugende Vorrichtung und das Frontteil so angepasst, dass der Sensor im Inneren des Gehäuses untergebracht werden kann, ohne dass der Außendurchmesser des handelsüblichen Gehäuses vergrößert werden muss. Durch das Integrieren des Sensors in das Gehäuse der Durchflussmesssonde wird keine weitere Öffnung in der Rohrleitung benötigt. Das Gehäuse der magnetisch-induktiven Durchflussmesssonde ist üblicherweise kreiszylindrisch ausgebildet, wodurch sie sich einfach in eine seitlich angebrachte Öffnung einer bestehenden Rohrleitung einführen lässt.

Ein Sensor zur Ermittlung eines Prozessparameters des Mediums umfasst einen Füllstandsmesser, Druckmesswandler, Temperatursensor, pH-Sensor, Dichtesensor und/oder Viskosimeter.

Erfindungsgemäß umfasst der Sensor einen Druckmesswandler und weist die Durchflussmesssonde vorzugsweise auch einen Temperatursensor auf, wobei der Druckmesswandler mit dem auf das Frontende wirkenden Druck beaufschlagbar ist, wobei der Temperatursensor dazu eingerichtet ist, ein von der Mediumstemperatur abhängiges Messsignal zu ermitteln.

Der Temperatursensor umfasst einen Halbleiter-Temperatursensor, ein Thermoelement, einen Temperaturfühler mit Schwingquarz, einen pyroelektrischen Temperatursensor, ein Pyrometer oder einen Faseroptischen Temperatursensor.

Der Druckmesswandler kann beliebig ausgestaltet sein. Der Druckmesswandler kann zum Beispiel als Dehnungsmessstreifen, piezoresistiver Drucksensor, piezoelektrischer Drucksensor, kapazitiver Drucksensor, induktiver Drucksensor, optischer Drucksensor, thermischer Drucksensor oder Hall-Drucksensor ausgebildet sein.

Gemäß einer Ausgestaltung ragt das Frontende des Druckmesswandlers aus dem Frontende des Frontteils hervor. Das Medium, das an das Frontende strömt, berührt auch den Druckmesswandler. Alternativ weist das Frontteil eine Vertiefung auf, in die der Druckmesswandler so eingesetzt ist, dass das Frontende des Druckmesswandlers in der Vertiefung versenkt ist. In beiden Fällen wirkt der Mediumsdruck direkt auf den Druckmesswandler, ohne dass er noch durch einen Wirkdruckkanal zum Druckmesswandler geleitet werden muss.

Gemäß einer weiteren Ausgestaltung ist der Druckmesswandler im Gehäuse integriert und durch ein Zwischenteil, einen Wirkdruckkanal oder Lufteinschlüsse vom Inneren der Rohrleitung getrennt.

Der Temperatursensor ist dazu eingerichtet ein von der Mediumstemperatur abhängiges Messsignal zu ermitteln. Dafür ist es vorteilhaft, wenn der Temperatursensor das Medium berührt.

Gemäß einer alternativen Ausgestaltung berührt der Temperatursensor das Medium nicht, sondern steht im Kontakt mit dem Frontteil oder mit dem Gehäuse, und ermittelt so das von der Mediumstemperatur abhängige Messsignal. Daher besteht der Teil des Frontteiles, mit dem der Temperatursensor im Kontakt steht, idealerweise aus einem Material, das eine ausreichend gute Wärmeleitfähigkeit aufweist.

Gemäß einer Ausgestaltung sind zwei Sensoren im Gehäuse angeordnet. Es ist besonders vorteilhaft, wenn im Gehäuse zwei Sensoren, insbesondere der Druckmesswandler und der Temperatursensor untergebracht sind. Dadurch kann auf das Einarbeiten zusätzlicher Öffnungen in die Rohrleitung verzichtet werden. Gemäß einer Ausgestaltung ist zwischen Druckmesswandler und Frontende eine Scheibe mit mindestens einem Wirkdruckkanal angeordnet.

Es ist besonders vorteilhaft, wenn zwischen dem Druckmesswandler und dem Frontende des Durchflusssensors eine Scheibe eingesetzt ist, die mindestens einen Wirkdruckkanal aufweist. Dadurch kann das Medium zentriert auf den Druckmesswandler, beispielsweise eine Messmembrane geleitet werden. Weiterhin ist der Druckmesswandler dadurch nicht dem Medium am Frontende direkt ausgesetzt. Vorteilhafterweise entkoppelt die Scheibe den Druckmesswandler vom Medium, so dass Druckschwankungen im Medium durch die Scheibe abgefangen werden, bevor sie den Druckmesswandler erreichen.

Der Anschluss des Druckmesswandlers befinden sich idealerweise im Inneren des Gehäuse, wo er mit der Mess- und/oder Auswerteeinheit verbunden ist.

Gemäß einer Ausgestaltung weist das Frontteil mindestens eine erste und eine zweite Öffnungen für die Messelektroden und eine dritte Öffnung für den Temperatursensor auf.

Es ist vorteilhaft, wenn das Frontteil eine Öffnung für den Temperatursensor aufweist, somit kann der Temperatursensor im Frontteil fluiddicht befestigt werden und hat einen direkten Kontakt mit dem Medium. Der Anschluss des Temperatursensors befinden sich idealerweise im Inneren des Gehäuse, wo er mit der Mess- und/oder Auswerteeinheit verbunden ist.

Erfindungsgemäß weist das Frontteil mindestens eine, bevorzugt drei Öffnungen auf, die jeweils als Wirkdruckkanal ausgebildet sind.

Es ist besonders vorteilhaft, wenn das Frontteil mindestens eine und bevorzugt drei Öffnungen, die jeweils als Wirkdruckkanal ausgebildet sind, aufweist und somit das Medium zum in dem Gehäuse angeordneten Druckmesswandler leitet. Dadurch steht der Druckmesswandler nicht im direkten Kontakt mit dem Medium am Frontende. Vorteilhafterweise ist der Durchmesser der Öffnungen so angepasst, dass vermieden wird, dass Teilchen aus dem Medium an den Druckmesswandler stoßen bzw. den Druckmesswandler oder Teile des Druckmesswandlers beschädigen. Dies ist besonders im Trinkwasserbereich von Vorteil, da so ein Beschädigen beispielsweise der Messmembrane und einem Eindringen von beispielsweise Öl aus dem piezoresistiven Druckmesswandler vorgebeugt werden kann.

Gemäß einer Ausgestaltung umfasst der Druckmesswandler eine Leiterplatte mit Anschlüssen für den Temperatursensor und/oder den Druckmesswandler und zumindest die Messelektroden, wobei die Leiterplatte mit einer Mess- und Auswerteeinheit verbunden ist.

Es ist besonders vorteilhaft, wenn die Leiterplatte einen seriellen Datenbus, insbesondere einen I²C Datenbus aufweist und dem I²C Protokoll untergeordnet ist. Dadurch können die Messelektroden, der Temperatursensor und/oder der Druckmesswandler einfach und kostengünstig über den Datenbus mit der Mess- und/oder Auswerteeinheit verbunden werden.

Eine erfindungsgemäße Messstelle zur Ermittlung des Durchflusses eines Mediums umfasst eine Rohrleitung mit Wandung zum Führen des Mediums und eine Öffnung in der Wandung, und ist dadurch gekennzeichnet, dass eine Durchflussmesssonde nach einem der vorherigen Ansprüche durch die Öffnung in die Rohrleitung eingesetzt ist.

Die Erfindung wird anhand der nachfolgenden Figuren näher erläutert. Es zeigt:
Fig. 1: eine schematische Perspektivansicht einer magnetisch-induktiven Durchflussmesssonde gemäß dem Stand der Technik;
Fig. 2: ein Längsschnitt einer ersten Ausgestaltung der erfindungsgemäßen magnetisch-induktiven Durchflussmesssonde in einer Messstelle;
Fig. 3: eine Explosionsdarstellung einer Ausgestaltung der erfindungsgemäßen magnetisch-induktiven Durchflussmesssonde; und
Fig. 4: eine Übersicht und eine Nahaufnahme eines Längsschnittes einer Ausgestaltung der erfindungsgemäßen magnetisch-induktiven Durchflussmesssonde.

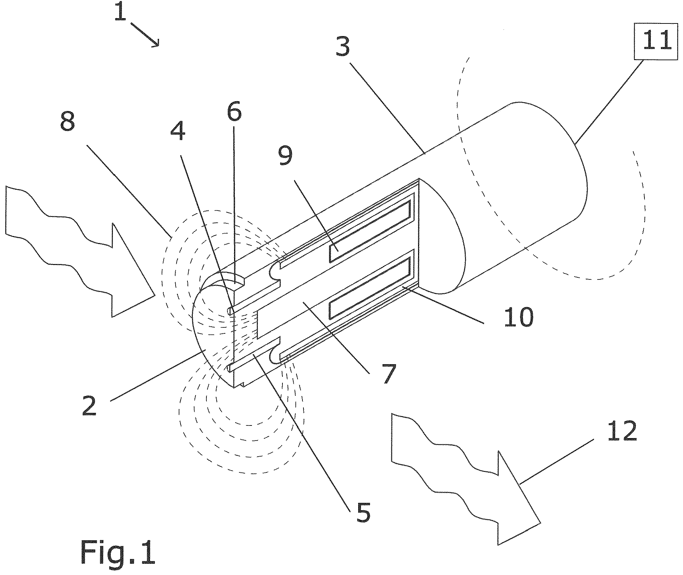

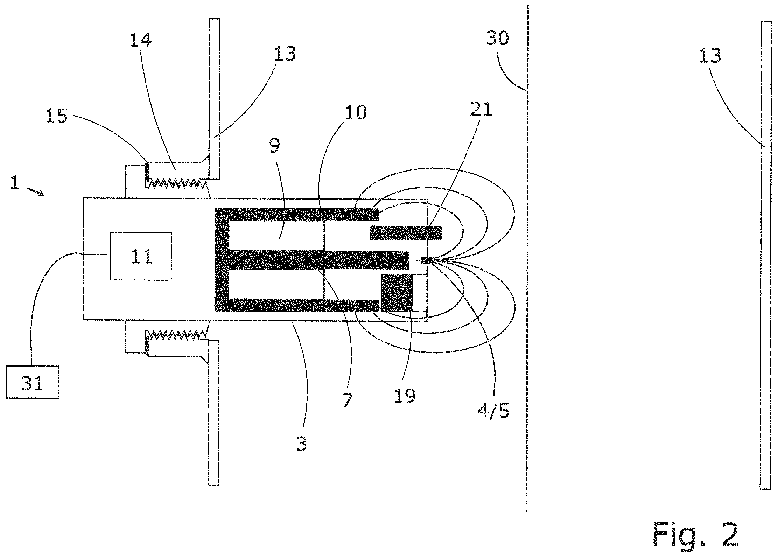

Anhand der perspektivischen und teilweise geschnittenen Darstellung der Fig. 1 wird zunächst das der Erfindung zugrunde liegende Messprinzip erläutert. Eine Durchflussmesssonde (1) umfasst ein im allgemeinen kreiszylindrisches, einen vorgegebenen Außendurchmesser aufweisendes Gehäuse (3). Dieses ist an den Durchmesser einer Bohrung angepasst, die sich in einer Wand einer in Fig. 1 nicht, dagegen in Fig. 2 dargestellten Rohrleitung (13) befindet und in die die Durchflussmesssonde (1) fluiddicht eingesteckt ist. In der Rohrleitung (13) strömt ein zu messendes Medium, in das die Durchflussmesssonde (1) praktisch senkrecht zur Strömungsrichtung des Mediums eintaucht, die durch die gewellten Pfeile (12) angedeutet ist. Ein in das Medium ragendes Frontende (2) des Gehäuses (3) ist mit einem Frontteil (6) aus Isoliermaterial fluiddicht verschlossen. Mittels einer im Gehäuse (2) angeordneten Spulenanordnung (9) lässt sich ein durch das Frontende hindurch, in das Medium hineinreichendes Magnetfeld (8) erzeugen. Ein mindestens teilweise aus einem weichmagnetischen Material bestehender, im Gehäuse (2) angeordneter Spulenkern (7) endet an oder in der Nähe des Frontendes. Eine Rückführung (10), die die Spulenanordnung (9) und den Spulenkern (7) umschließt, ist dazu eingerichtet das aus dem Frontende hindurchreichenden Magnetfeld (8) in das Gehäuse (2) zurückzuführen. Der Spulenkern (7), die Spulenanordnung (9) und eine Rückführung (10) bilden eine magnetfelderzeugenden Vorrichtung. Eine erste und eine zweite galvanische Messelektrode (4, 5) sind in dem Frontteil (6) angeordnet und berühren das Medium. An den Messelektroden (4, 5) lässt sich eine aufgrund des Faraday'schen Induktionsgesetzes induzierte elektrische Spannung mittels einer Mess- und/oder Auswerteeinheit (11) abgreifen. Diese ist maximal, wenn die Durchflussmesssonde so in die Rohrleitung (13) eingebaut ist, dass eine durch eine die beiden Messelektroden (4, 5) schneidende Gerade und eine Längsachse der Durchflussmesssonde aufgespannte Ebene senkrecht zu der Strömungsrichtung (12) bzw. Längsachse der Rohrleitung (21) verläuft.

In der Fig. 2 ist eine Ausgestaltung der Durchflussmessstelle im Längsschnitt dargestellt. Die Durchflussmesssonde (1) ist mittels einer Einschraubverbindung (14), die in die Wand der Rohrleitung (13) eingesetzt und mit ihr z.B. verschweißt ist, in der Rohrleitung (13) fluiddicht befestigt. Dieser Aufbau der Messstelle ist besonders zweckmäßig, da zunächst die Einschraubverbindung (14) in die Rohrleitung (13) eingesetzt und darin befestigt werden kann und erst danach die Durchflussmesssonde (1) in den Einschraubverbindung (14) eingesteckt bzw. eingeschraubt, ihrerseits darin fixiert und mittels einer Dichtung (15) abgedichtet zu werden braucht. Die zwei Messelektrode (4, 5) sind auf dem Frontende (2) diametral angeordnet. Die Durchflussmesssonde ist so in die Rohrleitung (13) einzusetzen, dass eine Längsebene, die durch eine die Messelektroden (4, 5) verbindende Gerade und den Normalenvektor des Frontendes (2) gebildet wird, die Längsachse (30) der Rohrleitung (13) senkrecht schneidet. Ein Temperatursensor (21) ragt durch das Frontende (2) in das Innere der Rohrleitung (13) und berührt das Medium. Der Temperatursensor (21) ist stiftförmig gebildet und im freiliegenden Raum zwischen Spulenkern (7) und Rückführung (10) angeordnet. Ein Druckmesswandler (19) ist im Inneren des Gehäuses (3) angeordnet. Durch Öffnungen im Frontende (2), die als Wirkdruckkänale ausgebildet sind, wird das Medium zum Druckmesswandler (19) geführt, wo dieser mit dem Mediumsdruck beaufschlagt wird. Der Druckmesswandler (19) ist im Gehäuse (3), zwischen Spulenkern (7) und Gehäusewandung angeordnet. Eine Mess- und/oder Auswerteeinheit (11) ist dazu eingerichtet die einzelnen Prozessparameter zu erfassen und an eine Anzeigeeinheit (31) weiterzuleiten. Die Mess- und/oder Auswerteeinheit (11) kann im Gehäuse (3) wie in Fig. 2 dargestellt oder extern angeordnet sein.

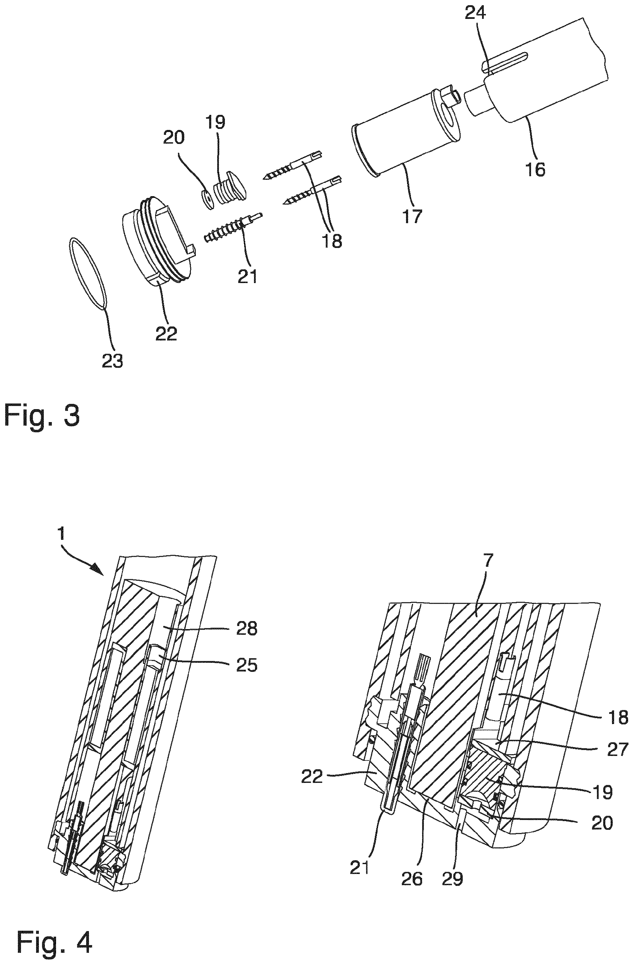

Die Fig. 3 zeigt eine Explosionsdarstellung einer Ausgestaltung der erfindungsgemäßen magnetisch-induktiven Durchflussmesssonde (1) mit einem Temperatursensor (21) und einem Druckmesswandler (19). Die Ausgestaltung umfasst einen Spulenkern mit Rückführung (7), wobei ein Schlitz in die Rückführung (10) zum Durchführen der hier nicht dargestellten Anschlusskabel zwischen der magnetfelderzeugenden Vorrichtung und Innenwandung des Gehäuses (3) entlang zur Mess- und/oder Auswerteeinheit (11) eingearbeitet ist. Die Messelektroden (18) sind stiftförmig ausgebildet und geriffelt bzw. weist ringförmige Ausbuchtungen auf, wodurch sie fluiddicht im Frontteil (22) fixiert werden können. Der Temperatursensor (21), hier in Form einer Tauchhülse abgebildet, weist ein Gewinde, insbesondere ringförmige Ausbuchtungen auf bzw. ist geriffelt ausgebildet und lässt sich dadurch fluiddicht in das Formteil anordnen. Der Druckmesswandler (19), insbesondere das Druckmesswandlergehäuse weist zwei Einkerbungen zum Führen jeweils eines Dichtringes auf. Außerdem ist eine Platine (27) zur Signalaufbereitung an die Rückseite des Druckmesswandlergehäuses angebracht, an die die Verbindungskabel der Messelektroden und des Temperatursensors zusammengeführt werden. Zwischen Frontende (26) des Frontteils (22) und Frontende des Druckmesswandlers (19) ist eine Scheibe (20) mit einem Wirkdruckkanal in Form einer Öffnung eingebracht. Das Frontteil (22) weist Öffnungen für die Messelektroden (18) und den Temperatursensor (21) auf, des Weiteren eine Vertiefung zum Einsetzen des Druckmesswandlers (19) in das Frontteil (22). Einkerbungen in den Seitenflächen des Frontteils (22) dienen dazu das Frontteil (22) im Gehäuse (3) zu fixieren. Eine in einer Vertiefung im Frontteil (22) eingesetzt Dichtung (23) dichtet das Frontteil (22) und das Gehäuse (3) gegen das in der Rohrleitung (13) fließende Medium ab. Des Weiteren weist das Frontteil (22) Öffnungen (29) auf, die als Wirkdruckkanal zum Führen des Mediums zum Druckmesswandler (19) ausgebildet sind.

Die Fig. 4 zeigt eine Übersicht einer zusammengesetzten magnetisch-induktiven Durchflussmesssonde (1). Nicht abgebildet sind die Kabel, die die Messelektroden (4, 5), den Temperatursensor (21) und den Druckmesswandler (19) mit dem auf die Platine (27) aufgebrachten Datenbus verbinden. Die Platine (27) zur Signalaufbereitung kommuniziert mit der Mess- und/oder Auswerteeinheit. Außerdem nicht abgebildet sind die Kabel zum Anschließen der Spulenvorrichtung an die Betriebseinheit. Was die Übersicht zeigt, die Nahaufnahme jedoch nicht abbildet, ist die Anschlussöffnung (28) in der magnetfelderzeugenden Vorrichtung bzw. im Spulenkern durch die die Leitung zum Verbinden der Spulenvorrichtung mit der Betriebseinheit geführt wird. Des Weiteren weist die Spulenvorrichtung einen Spulenanschluss (25) auf, der so geformt ist, dass die Spulenvorrichtung durch das Einführen des Spulenanschlusses (25) in die Anschlussöffnung (28) mit dem Spulenkern mechanisch fixiert wird. Der Spulenkern weist in dieser Ausgestaltung einen ersten Teil mit einem ersten Querschnitt und einen zweiten Teil mit einem zweiten Querschnitt auf, wobei der Querschnitt des zweiten Teils größer ist als der Querschnitt des ersten Teils. Der erste Teil steht senkrecht zu dem zweiten Teil. Beide Teile sind zylindrische ausgebildet und in diesem Fall einstückig miteinander verbunden. Die Spulenvorrichtung umschließt den ersten Teil und sitzt auf den zweiten Teil auf. Des Weiteren ist der zweite Teil einstückig mit einer hohlzylindrischen Rückführung verbunden. Die Anschlussöffnung (28) ist im zweiten Teil eingearbeitet.

Die Nahaufnahme zeigt zwei Vertiefungen im Frontteil (22). Eine erste Vertiefung dient als Fassung für den Druckmesswandler (19). Eine zweite, kreiszylindrische Vertiefung dient als Fassung für den Spulenkern und ist dazu ausgebildet den ersten Teil des kreiszylindrischen Spulenkerns zu führen und formschlüssig zu halten. Dafür ist der Durchmesser der Vertiefung an den Durchmesser des ersten Teils des Spulenkerns (7) angepasst. Dadurch endet das Ende des Spulenkerns am oder in der Nähe des Frontendes (26) und die aus dem Frontende (26) austretenden Magnetfeldlinien verlaufen bzw. die Symmetrieachse der Magnetfeldlininen verläuft im Wesentlich senkrecht durch das Frontende (26).

### Bezugszeichenliste

- 1: Durchflussmesssonde
- 2: Frontende
- 3: Gehäuse
- 4: erste Messelektrode
- 5: zweite Messelektrode
- 6: Frontteil
- 7: Spulenkern
- 8: Magnetfeldlinien
- 9: Spulenanordnung
- 10: Rückführung
- 11: Mess-, Betriebs- und/oder Auswerteeinheit
- 12: Strömungsrichtung
- 13: Rohrleitung
- 14: Einschraubverbindung
- 15: Dichtung
- 16: Spulenkern mit Rückführung
- 17: Spulenvorrichtung
- 18: Messelektrode
- 19: Druckmesswandler
- 20: Scheibe
- 21: Temperatursensor
- 22: Frontteil
- 23: Dichtung
- 24: Schlitz
- 25: Spulenanschluss
- 26: Frontende
- 27: Platine
- 28: Anschlussöffnung
- 29: Öffnung
- 30: Längsachse
- 31: Anzeigeeinheit

## Patentansprüche

1. Magnetisch-induktive Durchflussmesssonde (1) zur Ermittlung des Durchflussvolumens und/oder der Durchflussgeschwindigkeit eines flüssigen Mediums in einem Messrohr (13), umfassend:
- ein Gehäuse (3);
- ein im Gehäuse endseitig angeordnetes Frontteil (6) mit einem Frontende (2), wobei das Frontende mit dem Medium beaufschlagbar ist;
- mindestens zwei einen galvanischen Kontakt mit dem Medium bildende Messelektroden (4, 5), wobei das Frontteil mindestens eine erste und eine zweite Öffnungen für die Messelektroden aufweist; und
- eine im Gehäuse angeordnete magnetfelderzeugende Vorrichtung (7, 9) zur Erzeugung eines durch das Frontende hindurchreichenden Magnetfeldes (8); und wobei mindestens ein Sensor (19) zur Ermittlung eines Prozessparameters des Mediums in dem Gehäuse angeordnet ist, wobei der Sensor einen Druckmesswandler umfasst, welcher mit dem auf das Frontende wirkenden Druck beaufschlagbar ist, wobei das Frontteil mindestens eine Öffnung (29) aufweist der als Wirkdruckkanal ausgebildet ist.

2. Durchflussmesssonde nach Anspruch 1,
wobei der Sensor einen Temperatursensor (21) umfasst, wobei der Temperatursensor dazu eingerichtet ist, ein von der Mediumstemperatur abhängiges Messsignal zu ermitteln.

3. Durchflussmesssonde nach Anspruch 1 oder 2,
wobei zwei Sensoren im Gehäuse angeordnet sind.

4. Durchflussmesssonde nach Anspruch 1,
wobei zwischen Druckmesswandler und Frontende eine Scheibe (20) mit mindestens einem Wirkdruckkanal angeordnet ist.

5. Durchflussmesssonde nach Anspruch 2,
wobei das Frontteil mindestens eine erste und eine zweite Öffnungen für die Messelektroden und eine dritte Öffnung für den Temperatursensor aufweist.

6. Durchflussmesssonde nach einem der vorherigen Ansprüche,
wobei der Druckmesswandler eine Leiterplatte mit Anschlüssen für den Temperatursensor und/oder den Druckmesswandler und zumindest die Messelektroden umfasst,
wobei die Leiterplatte mit einer Mess- und Auswerteeinheit (11) verbunden ist

7. Messstelle zur Ermittlung eines Durchflussvolumens und/oder einer Durchflussgeschwindigkeit eines Mediums, umfassend:
- eine Rohrleitung (13) mit Wandung zum Führen des Mediums; und
- eine Öffnung in der Wandung;
**dadurch gekennzeichnet, dass** eine Durchflussmesssonde nach einem der vorherigen Ansprüche durch die Öffnung in die Rohrleitung eingesetzt ist.

## Claims

1. A magnetic-inductive flowmeter (1) for determining the flow volume and/or the flow speed of a liquid medium in a measurement tube (13), comprising:
- a housing (3);
- a front part (6) situated in the end of the housing and having a front end (2);
wherein the front end can be loaded by the medium;
- at least two measurement electrodes (4, 5) forming a galvanic contact with the medium;
wherein the front part has at least one first and one second opening for the measurement electrodes; and
- a magnetic-field-generating device (7, 9) situated in the housing for generating a magnetic field (8) extending through the front end; and
wherein at least one sensor (19) for determining a process parameter of the medium is situated in the housing,
wherein the sensor comprises a pressure transducer, which can be loaded by the pressure acting on the front end,
wherein the front part has at least one opening (29), which is formed as a differential pressure channel.

2. The flowmeter as claimed in claim 1,
wherein the sensor comprises a temperature sensor (21), wherein the temperature sensor is configured to determine a measurement signal dependent on the medium temperature.

3. The flowmeter as claimed in claim 1 or 2,
wherein two sensors are situated in the housing.

4. The flowmeter as claimed in claim 1,
wherein a disk (20) having at least one differential pressure channel is situated between the pressure transducer and the front end.

5. The flowmeter as claimed in claim 2,
wherein the front part has at least one first and one second opening for the measurement electrodes and one third opening for the temperature sensor.

6. The flowmeter as claimed in any one of the preceding claims,
wherein the pressure transducer comprises a printed circuit board with connections for the temperature sensor and/or the pressure transducer and at least the measurement electrodes, wherein the printed circuit board is connected to a measurement and evaluation unit (11).

7. A measurement point for determining a flow volume and/or a flow speed of a medium, comprising:
- a conduit (13) having a wall for guiding the medium; and
- an opening in the wall;
wherein a flowmeter as claimed in any one of the preceding claims is inserted through the opening into the conduit.

## Revendications

1. Sonde de mesure de débit électromagnétique (1) destinée à la détermination du volume d'écoulement et/ou de la vitesse d'écoulement d'un produit fluide s'écoulant dans un tube de mesure (13), laquelle sonde comprend :
- un boîtier (3) ;
- une partie frontale (6) disposée à l'extrémité dans le boîtier et présentant une extrémité frontale (2),
l'extrémité frontale pouvant être soumise à l'action du produit ;
- au moins deux électrodes de mesure (4, 5) formant un contact galvanique avec le produit,
la partie frontale présentant au moins une première et une deuxième ouverture pour les électrodes de mesure ; et
- un dispositif générateur de champ magnétique (7, 9) disposé dans le boîtier et destiné à générer un champ magnétique (8) traversant l'extrémité frontale ; et
au moins un capteur (19) étant disposé dans le boîtier pour déterminer un paramètre de process du produit,
le capteur comprenant un transducteur de pression pouvant être alimenté par la pression agissant sur l'extrémité frontale,
la partie frontale présentant au moins une ouverture (29), laquelle est conçue comme un canal de pression active.

2. Sonde de mesure de débit selon la revendication 1,
pour laquelle le capteur comprend un capteur de température (21),
le capteur de température étant conçu pour déterminer un signal de mesure dépendant de la température du produit.

3. Sonde de mesure de débit selon la revendication 1 ou 2,
pour laquelle deux capteurs sont disposés dans le boîtier.

4. Sonde de mesure de débit selon la revendication 1,
pour laquelle un disque (20) avec au moins un canal de pression active est disposé entre le capteur de pression et l'extrémité frontale.

5. Sonde de mesure de débit selon la revendication 2,
pour laquelle la partie frontale présente au moins une première et une deuxième ouvertures pour les électrodes de mesure et une troisième ouverture pour le capteur de température.

6. Sonde de mesure de débit selon l'une des revendications précédentes,
pour laquelle le transducteur de pression comprend une carte de circuit imprimé avec des connexions pour le capteur de température et/ou le transducteur de pression et au moins les électrodes de mesure,
la carte de circuit imprimé étant reliée à une unité de mesure et d'exploitation (11).

7. Point de mesure destiné à la détermination d'un volume d'écoulement et/ou d'une vitesse d'écoulement d'un produit, lequel point de mesure comprend :
- une conduite (13) avec une paroi pour le guidage du produit ; et
- une ouverture dans la paroi ;
**caractérisé en ce qu'**une sonde de mesure de débit selon l'une des revendications précédentes est insérée dans la conduite à travers l'ouverture.
